# EUROPEAN PATENT SPECIFICATION

(11) **EP 1 916 653 B1**
(45) Date of publication and mention of the grant of the patent: **29.04.2009**
(21) Application number: 07020848.3
(22) Date of filing: 24.10.2007
(51) Int. Cl.: G11B 7/0065, G11B 7/135

(54) **Holographic information recording and reproducing apparatus**
Holographisches Informationsaufzeichnungsgerät und Informationswiedergabegerät
Appareil holographique d'enregistrement et de reproduction d'informations

(30) Priority: 25.10.2006 JP 2006290302
(43) Date of publication of application: 30.04.2008
(73) Proprietor: Funai Electric Co., Ltd., Daito-shi Osaka 574-0013 (JP)
(72) Inventor: Nagashima, Kenji, Osaka 574-0013 (JP); Horibe, Ryusuke, Osaka 574-0013 (JP); Hirano, Atsuya, Osaka 574-0013 (JP)
(74) Representative: Beetz & Partner

(56) References cited:
- EP-A- 1 542 219
- EP-A- 1 732 068
- EP-A- 1 881 494
- US-A1- 2003 039 001
- US-A1- 2007 153 663
- US-A1- 2008 007 808

## Description

### BACKGROUND OF THE INVENTION

### 1. Field of the Invention

The present invention relates to a light information recording apparatus and a light information reproducing apparatus, and in particular, the present invention relates to a light information recording apparatus that performs holographic recording of information in a recording medium by an interference fringe which is obtained by interference of information light and reference light, and a light information reproducing apparatus that performs reproducing of information in a recording medium by diffraction of the reference light using an interference fringe. The information is holographically recorded in the medium by the interference fringe.

### 2. Description of Related Art

In a light information recording apparatus which performs holographic recording of information in a recording medium, it is necessary to superimpose reference light and information light inside of the recording medium to generate an interference fringe. For this purpose it is necessary to obtain the information light and the reference light from single beam, however, it is difficult to perform separation and combination of the beam without deterioration of characteristics by a simple structure. As a result, it is impossible to obtain the interference fringe which has high contrast. To solve this problem heretofore various types of light information recording apparatus have been proposed. For example, in JP-A-2006-039181 and WO2004/102542, a structure is proposed in which beam is separated into two by diffracting a part of the beam utilizing a spatial light modulator, and in JP-A-2005-292765, a structure is proposed in which beam is separated into two utilizing the spatial light modulator and a diffusion plate which is disposed outside of the spatial light modulator.

However, by the structures proposed in JP-A-2006-039181, WO2004/102542, and JP-A-2005-292765, it is difficult to generate beam which has uniform light intensity, and loss in amount of light comes about. Further, when recording is performed it is impossible to obtain good recording characteristics because contrast of the interference fringe is low, and when reproducing is performed it is impossible to obtain signal which has good quality because stray light tends to occur and the light enters a light receiving element.
US 2008/007808 A1 (family member of WO 2006/064660 A) relates to a record carrier such as an optical disk, optical card and the like with which information recording or information reproduction is optically performed and describes a hologram recording and reproducing method, device, and system including a hologram recording layer being information-recordable and information-reproducible by irradiation of luminous fluxes.
EP 1 732 068 A (family member of WP 2005/096281) shows a hologram recording device which can easily perform multiplex recording or reproduction on a hologram recording medium, wherein the hologram recording device is described to include an optical system and a distance controlling mechanism. The optical system is described to focus on a substantially same location of a hologram recording medium a signal light modulated at a light modulating element and a reference light whose phase has been modulated at a phase modulating element.
US 2003/039001 A1 shows a method and a system for recording successive holograms in a recording medium, wherein the method is described to utilize a multilayer holographic storage media comprising a reflective substrate layer, a polarization shifting layer disposed above the reflective substrate layer, and a photo-recording medium layer disposed above the polarization shifting layer. Successive holograms may be recorded by translating multilayer holographic storage media or a reference and an object beam along a shift multiplex direction, where the reference beam and object beam are propagated to successive areas of an photo-recording medium.

### SUMMARY OF THE INVENTION

The present invention is made in view of the above described situation, and it is an object of the present invention to provide a light information recording apparatus which has better recording characteristics and small loss in amount of light though the apparatus has a simple structure, and to provide a light information reproducing apparatus by which it is possible to obtain better quality signal though the apparatus has a simple structure.

To attain the above described object, a light information recording apparatus according to claim 1, a light information reproducing apparatus according to claim 3, and a light information recording and reproducing apparatus according to claim 7 are proposed. Preferred embodiments of the invention are described within the dependent claims.
A light information recording apparatus according to one aspect of the present invention performs holographic recording of information in a recording medium using an interference fringe which is obtained by interference of information light and reference light, and the apparatus includes: a laser light source; a spatial light modulator which modulates spatially a center part of laser beam which is emitted from the laser light source into information light; a mirror which reflects a peripheral part of the laser beam which is emitted from the laser light source and makes it become reference light for recording; an objective lens which irradiates the recording medium with the information light and the reference light; and a hologram pattern which is disposed in a light path between the mirror and the objective lens, the apparatus is characterized by a structure in which the hologram pattern diffracts the reference light such that the reference light which is emitted from the objective lens to the recording medium side, is superimposed on the information light which is emitted from the objective lens to the recording medium side in the vicinity of a light condensing point of the information light, and the reference light is condensed at a different point from the light condensing point of the information light.

A light information reproducing apparatus according to another aspect of the present invention performs reproduction of information by diffraction of reference light using an interference fringe, and the apparatus includes: a laser light source; a mirror which reflects a peripheral part of laser beam which is emitted from the laser light source and makes it become reference light for reproducing; an objective lens which irradiates a recording medium in which information is holographically recorded by an interference fringe with the reference light; and a hologram pattern which is disposed in a light path between the mirror and the objective lens, the apparatus is characterized by a structure in which the hologram pattern diffracts the reference light in a going path such that the reference light which is emitted from the objective lens in a returning path comes off the light path of the reference light in the going path.

### BRIEF DESCRIPTION OF THE DRAWINGS

Fig. 1 is a schematic diagram to show a general optical structure of a light information recording and reproducing apparatus according to a first embodiment;
Fig. 2 is an enlarged diagram to show a relevant part of the light information recording and reproducing apparatus according to the first embodiment in Fig. 1;
Figs.3A and 3B are diagrams to show an outline view and a cross sectional view of a hologram element which is included in the light information recording and reproducing apparatus according to the first embodiment in Fig. 1;
Figs. 4A and 4B are schematic diagrams to show a general optical structure of a light information recording and reproducing apparatus according to a second embodiment, representing an embodiment of the present invention;
Figs. 5A and 5B are enlarged diagrams to show respective relevant parts of the light information recording and reproducing apparatus according to the second embodiment, representing an embodiment of the present invention in Figs. 4A and 4B; and
Figs. 6A and 6B are diagrams to show an outline view and a cross sectional view of a hologram element which is included in the light information recording and reproducing apparatus according to the second embodiment, representing an embodiment of the present invention in Figs. 4A and 4B.

### DETAILED DESCRIPTION OF THE PREFERRED EMBODIMENTS

Hereinafter embodiments and the like of a light information recording apparatus and a light information reproducing apparatus in accordance with the present invention will be explained with reference to the attached drawings. The respective embodiments include both structures of the light information recording apparatus and the light information reproducing apparatus, and they compose a light information recording and reproducing apparatus as a whole. That is to say, the respective embodiments of the light information recording and reproducing apparatus include a light information recording function that performs holographic recording of information in a recording medium using an interference fringe which is obtained by interference of information light and reference light, and a light information reproducing function that performs reproducing of information holographically recorded in a recording medium by an interference fringe by diffracting the reference light using the interference fringe. Further in these embodiments, a disc shaped optical disc is supposed as the recording medium, however, the present invention is not limited to the optical disc, and it is possible to apply the present invention to any recording medium as far as the recording medium is able to performs holographic recording of information using an interference fringe which is obtained by interference of information light and reference light. For example, it is possible to apply recording media such as a card type or a polyhedron type to the respective embodiments.

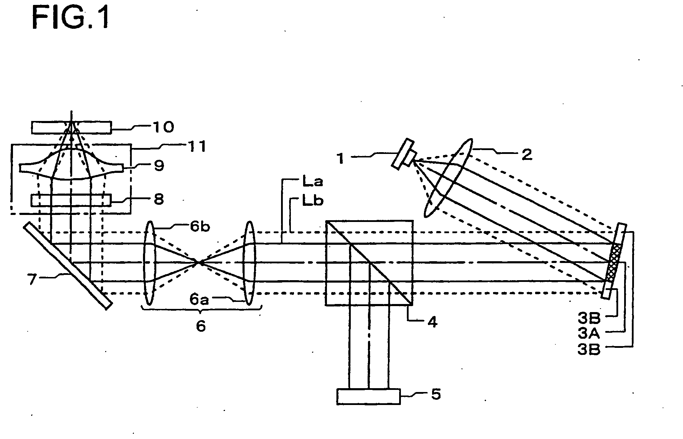

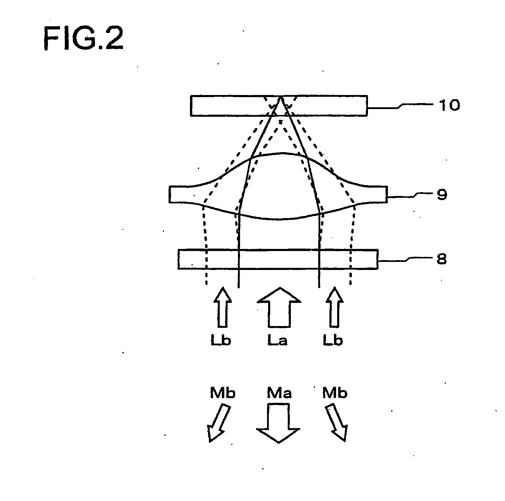

Fig. 1 shows a general optical structure of a light information recording and reproducing apparatus according to a first embodiment of the present application, which is however not representing the invention. Fig. 2 shows an enlarged relevant part of the light information recording and reproducing apparatus of the first embodiment. In Fig. 1 and Fig. 2, reference numeral 1 designates a laser light source, for example, a semiconductor laser, 2 designates a collimator lens, 3A designates a spatial light modulator, 3B designates a mirror, 4 designates a beam splitter, 5 designates a light receiving element, for example, a charge coupled device (CCD), 6 designates a relay lens, 6a is a first relay lens and 6b is a second relay lens, 7 designates a mirror, 8 designates a hologram element, 9 designates an objective lens, 10 designates a recording medium, and 11 designates an actuator.

An optical structure of the light information recording and reproducing apparatus according to the first embodiment will be explained below in an order along respective light paths at recording information time and reproducing information time. As shown in Fig. 1, when information is recorded, laser beam emitted from the laser light source 1 is converted into parallel beam by the collimator lens 2 and then the beam enters obliquely the spatial light modulator 3A and the mirror 3B. A center part of the laser beam is modulated spatially by the spatial light modulator 3A into information light La, and a peripheral part of the laser beam is reflected by the mirror 3B to make it become reference light Lb for recording.

The spatial light modulator 3A is a reflective light modulation element which modulates spatially entering light into outgoing light which has two-dimensional digital pattern information. As for one of concrete example of this spatial light modulator 3A, it is possible to give a digital micro-mirror device and a reflective liquid crystal display element. In a case the digital micro-mirror device is utilized as the spatial light modulator 3A, light which enters the device is modulated spatially by reflection utilizing respective micro-mirrors to ON/OFF state (for example, inclined at a degree of ±12). At that time only the light reflected by the micro-mirror to the ON state becomes the information light La and the light is emitted to the beam splitter 4. In a case the reflective liquid crystal display element is utilized as the spatial light modulator 3A, light which enters the device is modulated spatially by reflection or absorption utilizing ON/OFF pattern of each pixel under orientation control of the liquid crystal. At that time only the light reflected by the pixel to the ON state becomes the information light La and the light is emitted to the beam splitter 4.

The mirror 3B is a flat mirror and it is disposed around the spatial light modulator 3A in a ring shape. For example it is possible to form the mirror 3B by performing a reflective coating (for example, aluminum coating) on a peripheral portion of an area at which the entering light is modulated, in a surface of a cover glass of the spatial light modulator 3A. In that case, a center part of the laser beam passes a center portion of the ring in the mirror 3B and the beam is reflected by the spatial light modulator 3A. The laser beam reflected by the mirror 3B enters the beam splitter 4 as the beam keeps a coaxial state with the laser beam which is reflected by the spatial light modulator 3A.

The beam splitter 4 functions as a half mirror to divide amount of the entering light into halves transmitted light and reflected light. As a result, when the information light La and the reference light Lb enters the beam splitter 4, one-half of the amount of light passes the beam splitter 4 and enters the relay lens 6. The relay lens 6 is composed of a first relay lens 6a and a second relay lens 6b, and the relay lens 6 forms an optical image of a two-dimensional digital pattern information (formed by the spatial light modulator 3A) contained in the information light La on a surface of an entrance pupil of the objective lens 9. At this point it is also possible to perform improvement in picture quality using desired filtering by arrangement of a filter at a Fourier plane between the first relay lens 6a and the second relay lens 6b.

The information light La and the reference light Lb which are emitted from the relay lens 6, are reflected by the mirror 7 and then the lights enter the hologram element 8. The hologram element 8 is attached to the actuator 11 along with the objective lens 9. The actuator 11 is a driving mechanism to move the objective lens 9 at focusing, tracking or the like. An actuator movable element which moves as one part of the actuator 11, is composed of the hologram element 8, the objective lens 9, a lens holder (not shown), and the like. That is to say, a structure is employed in which the hologram element 8, the objective lens 9, and the like are arranged integrally on the lens holder that holds the objective lens 9. Because the hologram element 8 is also mounted on the actuator 11 along with the objective lens 9, positional relation between the objective lens 9 and the hologram element 8 is maintained always in a constant state even when the information is recorded and reproduced. As a result it is possible to avoid deterioration in characteristics which is caused by displacement of the hologram element 8 and the objective lens 9.

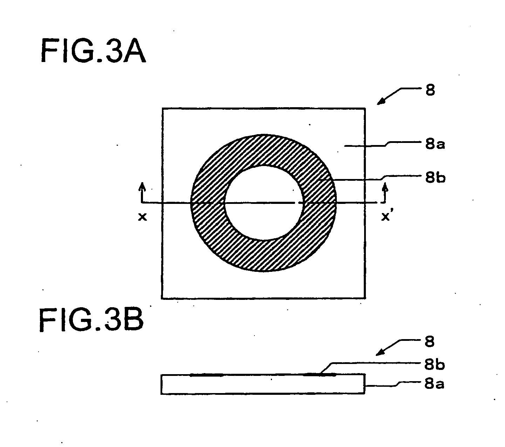

One concrete example of the hologram element 8 is shown in Figs. 3A and 3B. Fig. 3A shows an outline view of top surface side of the hologram element 8, and Fig. 3B shows a cross sectional view of the hologram element 8 when cut along a line x - x' shown in Fig. 3A. The hologram element 8 is a surface relief type hologram element which is formed by making a hologram pattern 8b on a transparent substrate 8a. The hologram pattern 8b is made in a ring shape on a surface of the transparent substrate 8a and it composes a hologram lens which acts as a concave lens on the reference light Lb.

The entering light receives only an action from the transparent substrate 8a in a part other than the hologram pattern 8b on the hologram element 8. The transparent substrate 8a is formed of a plane-parallel plate. When light enters the hologram element 8, the reference light Lb enters the hologram pattern 8b and the information light La enters the center portion of the ring of the hologram pattern 8b. Therefore, the reference light Lb receives diffraction action of the hologram pattern 8b and then it is condensed by the objective lens 9. On the other hand, the information light La passes the hologram element 8 without receiving the diffraction action of the hologram pattern 8b and then it is condensed by the objective lens 9.

As shown in Fig. 2, the objective lens 9 irradiates the recording medium 10 with the information light La and the reference light Lb, exposes the recording medium 10 to the interference fringe which is obtained by the interference of the information light La and the reference light Lb, and performs holographic recording of the information in the recording medium 10. At that time the hologram pattern 8b diffracts the reference light Lb such that the reference light Lb which is emitted from the objective lens 9 to the recording medium 10 side, is superimposed on the information light La which is emitted from the objective lens 9 to the recording medium 10 side in the vicinity of a light condensing point of the information light La, and the reference light Lb is condensed at a different point from the light condensing point of the information light La. The reference light Lb is not diffused to direct to the information light La, but it is condensed with shifting the light condensing point for the outside to direct to the information light La, it is possible to form the interference fringe having high contrast.

As described above, if the hologram lens which has optical power and displacement in its axis is structured by the hologram pattern 8b, it is possible to realize the diffraction action to condense light such that the light condensing point is shifted in vertical direction or lateral direction or it is defocused to center. If the diffraction action of the hologram pattern 8b is used, it is possible to record information with good recording characteristics in the recording medium 10 because it is possible to obtain the interference fringe with high contrast though the apparatus has a simple structure. In addition, because it is possible to generate the information light La and reference light Lb which have uniform light intensity by the diffraction, it is possible to make loss in amount of the light smaller. The effect of reducing the loss in amount of the light becomes much larger because only the reference light Lb is diffracted just before the objective lens 9.

Because the hologram pattern 8b acts as a concave lens on the reference light Lb, the reference light Lb is superimposed uniformly as spread beam on the information light La in the vicinity of the light condensing point. As a result, it is possible to obtain the interference fringe with much higher contrast by the concave lens effect though the apparatus has a simple structure, and it is possible to attain further improvement in the recording characteristics.

Because the hologram pattern 8b is structured by the surface relief type hologram element 8, it is possible to separate the reference light Lb with high diffraction efficiency. Because it is possible to make the hologram pattern 8b into a blaze type in this system, it is possible to make almost all the light intersects with the information light La at high diffraction efficiency. Further, it is possible to adjust light amount of the reference light Lb by adjusting an area of the hologram pattern 8b and an area of the mirror 3B which corresponds to the area of the hologram pattern 8b. Therefore, it is possible to make light intensity ratio of the information light La and the reference light Lb closer to one to one. When the light intensity ratio of the information light La and the reference light Lb is made closer to one to one, it is possible to improve the efficiency of use of light and the contrast of the interference fringe.

Further, because the hologram pattern 8b is formed in the ring shape on a surface of the transparent substrate 8a, it is possible to diffract only the reference light Lb which is composed of a peripheral part of the laser beam. At that time because the information light La at the center part of the laser beam can enter the center portion of the ring of the hologram pattern 8b and can pass the hologram element 8 without receiving the diffraction action, it is possible to suppress effect of the hologram pattern 8b to the information light La.

When the information is reproduced, the laser beam emitted from the laser light source 1 is converted into parallel beam by the collimator lens 2 and then it enters the spatial light modulator 3A and the mirror 3B obliquely. However the center part of the laser beam does not enter the beam splitter 4 by light shielding effect of the spatial light modulator 3A because the spatial light modulator 3A is set in the OFF state. On the other hand the peripheral part of the laser beam is reflected by the ring shaped mirror 3B to make it become the reference light Lb for reproducing and it enters the beam splitter 4. When the reference light Lb for reproducing enters the beam splitter 4, one half of the light amount of the reference light Lb passes the beam splitter 4 and it enters the relay lens 6.

The reference light Lb for reproducing which is emitted from the relay lens 6, is reflected by the mirror 7 and then it enters the hologram element 8. The reference light Lb which enters the hologram element 8 receives the diffraction action by the hologram pattern 8b, and then it is condensed by the objective lens 9. The objective lens 9 irradiates the recording medium 10 with the reference light Lb as shown in Fig. 2. Information is holographically recorded in the recording medium 10 by the interference fringe. The reference light Lb is diffracted by the interference fringe of the recording medium 10 and generates reproduced light Ma to perform reproducing of the information. At that time the hologram pattern 8b diffracts the reference light Lb in a going path such that the reference light Mb which is emitted from the objective lens 9 in a returning path comes off the light path of the reference light Lb in the going path. Because the hologram patter 8b has the concave lens effect which has uniform optical power, the reference light Lb which has a defocused state in the going path returns as the reference light Mb which has a divergent state in the returning path.

The reproduced light Ma which is generated by the recording medium 10 enters the objective lens 9 along the light path of the information light La. The reproduced light Ma which is emitted from the objective lens 9 passes the hologram element 8 through the center portion of the ring of the hologram pattern 8b. After the reproduced light Ma is reflected by the mirror 7, it passes through the relay lens 6 and enters the beam splitter 4. When the reproduced light Ma enters the beam splitter 4, one half of the light amount of the reproduced light Ma is reflected by the beam splitter 4 and it reaches a light receiving surface of the light receiving element 5 to provide image. The light receiving element 5 outputs the light information as electric signal in the reproduced light Ma which is received.

As described above, because the hologram pattern 8b diffracts the reference light Lb in a going path such that the reference light Mb which is emitted from the objective lens 9 in a returning path comes off the light path of the reference light Lb in a going path, it is possible to suppress generation of stray light though the system has a simple structure. Because the reference light Mb in the returning path becomes only largely defocused image in the light receiving element 5, it is difficult to generate the stray light which enters the light receiving element 5 so signal characteristics become better. In other words, though the signal quality is deteriorated when the stray light enters the light receiving element 5 when reproducing is performed, it becomes possible to obtain the signal which has better quality because the generation of the stray light is suppressed by the hologram pattern 8b.

Because the hologram pattern 8b acts as the concave lens on the reference light Mb, the reference light Mb in the returning path goes in a direction in which it comes away from the reproduced light Ma. As a result, it is possible to suppress the generation of the stray light more effectively. Because the hologram pattern 8b is structured by the surface relief type hologram element 8, it is possible to perform separation of the reference light Mb with higher diffraction efficiency. Because it is possible to make the hologram pattern 8b into a blaze type in this system, it is possible to use almost all the light for the reproducing of the information at high diffraction efficiency. Further, because the hologram pattern 8b is formed in the ring shape on the surface of the transparent substrate 8a, it is possible to diffract only the reference light Lb which is composed of the peripheral part of the laser beam. Therefore, it is possible to suppress the generation of the stray light more effectively.

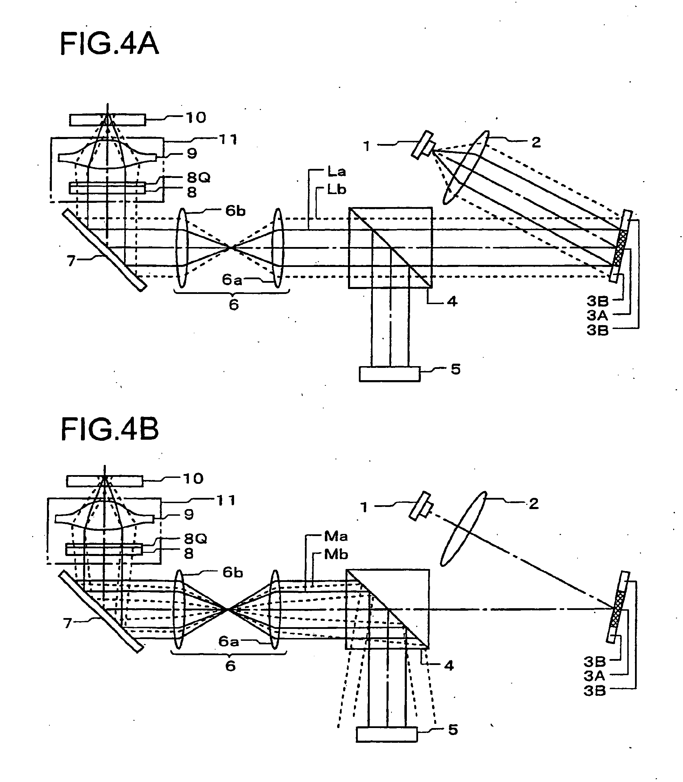

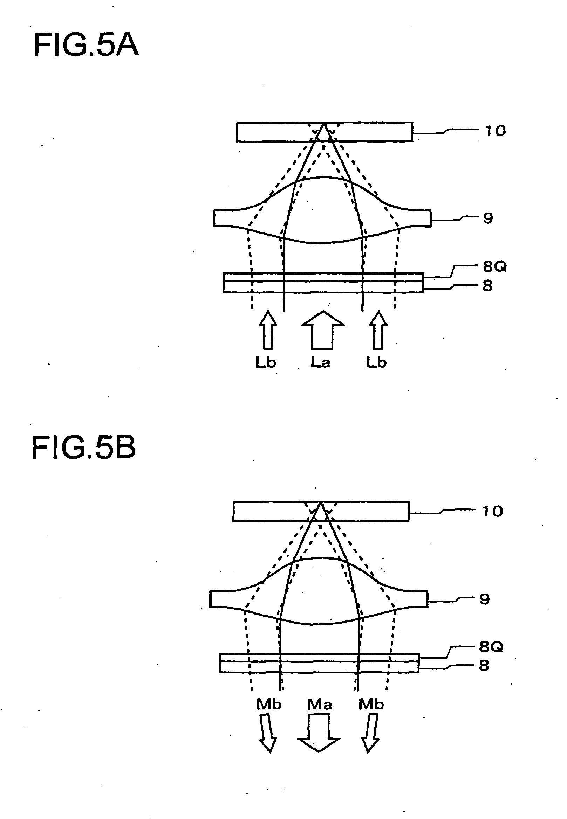

Figs. 4A and 4B show a general optical structure of a light information recording and reproducing apparatus according to a second embodiment which is an embodiment of the present invention. Figs. 5A and 5B show an enlarged relevant part of the light information recording and reproducing apparatus of the second embodiment which is an embodiment of the present invention. Figs. 4A and 5A show the going path in each of light paths at recording of the information and reproducing of the information, Figs. 4B and 5B show the returning path in each of light paths at reproducing of the information. In Figs. 4A, 4B and Figs. 5A, 5B, reference numeral 1 designates a laser light source, for example, a semiconductor laser, 2 designates a collimator lens, 3A designates a spatial light modulator, 3B designates a mirror, 4 designates a beam splitter, 5 designates a light receiving element, for example, a charge coupled device (CCD), 6 designates a relay lens, 6a is a first relay lens and 6b is a second relay lens, 7 designates a mirror, 8 designates a hologram element, 8Q designates a quarter-wave plate, 9 designates an objective lens, 10 designates a recording medium, and 11 designates an actuator.

An optical structure of the light information recording and reproducing apparatus according to the second embodiment will be explained below in an order along respective light paths at recording information and reproducing information. As shown in Fig. 4A, when information is recorded, laser beam emitted from the laser light source 1 is converted into parallel beam by the collimator lens 2 and then it enters the spatial light modulator 3A and the mirror 3B obliquely. And a center part of the laser beam is modulated spatially by the spatial light modulator 3A into the information light La, and a peripheral part of the laser beam is reflected by the mirror 3B to make it become reference light Lb for recording.

The spatial light modulator 3A is a reflective light modulation element which modulates spatially entering light into outgoing light which has two-dimensional digital pattern information. As for one of concrete example of this spatial light modulator 3A, it is possible to give a digital micro-mirror device and a reflective liquid crystal display element. In a case a digital micro-mirror device is utilized as the spatial light modulator 3A, light entering the device is modulated spatially by reflection utilizing respective micro-mirrors to ON/OFF state (for example, inclined at a degree of ±12). At that time only the light reflected by the micro-mirror to the ON state becomes the information light La and the light is emitted to the beam splitter 4. In a case the reflective liquid crystal display element is utilized as the spatial light modulator 3A, light which enters the device is modulated spatially by reflection or absorption utilizing ON/OFF pattern of each pixel under orientation control of the liquid crystal. At that time only the light reflected by the pixel to the ON state becomes the information light La and the light is emitted to the beam splitter 4.

The mirror 3B is a flat mirror and it is disposed around the spatial light modulator 3A in a ring shape. For example it is possible to form the mirror 3B by performing a reflective coating (for example, aluminum coating) on a peripheral portion of an area at which the entering light is modulated, in a surface of a cover glass of the spatial light modulator 3A. In that case, a center part of the laser beam passes a center portion of the ring in the mirror 3B and the beam is reflected by the spatial light modulator 3A. The laser beam reflected by the mirror 3B enters the beam splitter 4 as the beam keeps a coaxial state with the laser beam which is reflected by the spatial light modulator 3A.

The beam splitter 4 functions as a half mirror to divide amount of the entering light into halves transmitted light and reflected light. As a result, when the information light La and the reference light Lb enters the beam splitter 4, one-half of the amount of light passes the beam splitter 4 and enters the relay lens 6. The relay lens 6 is composed of a first relay lens 6a and a second relay lens 6b, and the relay lens 6 forms an optical image of a two-dimensional digital pattern information (formed by the spatial light modulator 3A) contained in the information light La on a surface of an entrance pupil of the objective lens 9. At this point it is also possible to perform improvement in picture quality using desired filtering by arrangement of a filter at a Fourier plane between the first relay lens 6a and the second relay lens 6b.

The information light La and the reference light Lb which are emitted from the relay lens 6, are reflected by the mirror 7 and then the lights enter the hologram element 8 and the quarter-wave plate 8Q in this order. The hologram element 8 and the quarter-wave plate 8Q are attached to the actuator 11 along with the objective lens 9. The actuator 11 is a driving mechanism to move the objective lens 9 at focusing, tracking or the like. An actuator movable element which moves as one part of the actuator 11, is composed of the hologram element 8, the quarter-wave plate 8Q, the objective lens 9, a lens holder (not shown) and the like. That is to say, a structure is employed in which the hologram element 8, the quarter-wave plate 8Q, the objective lens 9 and the like are arranged integrally on the lens holder that holds the objective lens 9. Because the hologram element 8 and the quarter-wave plate 8Q are also mounted on the actuator 11 along with the objective lens 9, positional relation between the objective lens 9, the hologram element 8 and the quarter-wave plate 8Q is maintained always in a constant state even when the information is recorded and reproduced. As a result it is possible to avoid deterioration in characteristics which is caused by displacement of the objective lens 9, the hologram element 8 and the quarter-wave plate 8Q each other.

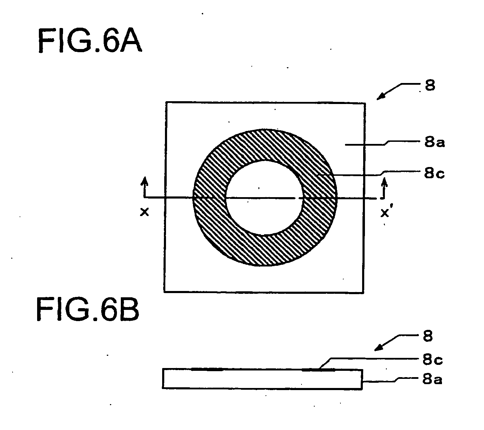

One concrete example of the hologram element 8 is shown in Figs. 6A and 6B. Fig. 6A shows an outline view of top surface side of the hologram element 8, and Fig. 6B shows a cross sectional view of the hologram element 8 when cut along a line x - x' shown in Fig. 6A. The hologram element 8 is a surface relief type hologram element which is formed by making a polarization hologram pattern 8c which diffracts only a specific linearly polarized light on a transparent substrate 8a. The polarization hologram pattern 8c is made in a ring shape on a surface of the transparent substrate 8a and it composes a hologram lens which acts as a concave lens on the reference light Lb.

The entering light receives only an action from the transparent substrate 8a which is formed of a plane-parallel plate in a part other than the polarization hologram pattern 8c on the hologram element 8. When light enters the hologram element 8, the reference light Lb enters the polarization hologram pattern 8c as the above described specific linearly polarized light and the information light La enters the center portion of the ring of the polarization hologram pattern 8c. As a result, the reference light Lb receives a diffraction action of the polarization hologram pattern 8c and then it is condensed by the objective lens 9. On the other hand, the information light La passes the hologram element 8 without receiving the diffraction action of the polarization hologram pattern 8c and then it is condensed by the objective lens 9. At this point, the information light La and the reference light Lb which passed the hologram element 8 are converted from the linear polarization to circular polarization by passing the quarter-wave plate 8Q.

As shown in Fig. 5A, the objective lens 9 irradiates the recording medium 10 with the information light La and the reference light Lb, exposes the recording medium 10 to the interference fringe which is obtained by the interference of the information light La and the reference light Lb, and performs holographic recording of the information in the recording medium 10. At that time the polarization hologram pattern 8c diffracts the reference light Lb such that the reference light Lb which is emitted from the objective lens 9 to the recording medium 10 side, is superimposed on the information light La which is emitted from the objective lens 9 to the recording medium 10 side in the vicinity of a light condensing point of the information light La, and the reference light Lb is condensed at a different point from the light condensing point of the information light La. The reference light Lb is not diffused to direct to the information light La, but it is condensed with shifting the light condensing point for the outside to direct to the information light La, it is possible to form the interference fringe which has high contrast.

As described above, if the hologram lens which has optical power and displacement in its axis is structured by the polarization hologram pattern 8c, it is possible to realize the diffraction action to condense light such that the light condensing point is shifted in vertical direction or lateral direction or it is defocused to center. Using the diffraction action of the polarization hologram pattern 8c, it is possible to record information with good recording characteristics in the recording medium 10 because it is possible to obtain the interference fringe with high contrast though the apparatus has a simple structure. In addition, because it is possible to generate the information light La and reference light Lb which have uniform light intensity by the diffraction, it is possible to make loss in amount of the light smaller. The effect of reducing the loss in amount of the light becomes much larger because only the reference light Lb is diffracted just before the objective lens 9.

Because the polarization hologram pattern 8c acts as a concave lens on the reference light Lb, the reference light Lb is superimposed uniformly as spread beam on the information light La in the vicinity of the light condensing point. Therefore, it is possible to obtain the interference fringe with much higher contrast by the concave lens effect though the apparatus has a simple structure, and further it is possible to attain improvement in the recording characteristics.

Because the polarization hologram pattern 8c is structured by the surface relief type hologram element 8, it is possible to separate the reference light Lb with high diffraction efficiency. Because it is possible to make the polarization hologram pattern 8c into a blaze type in this system, it is possible to make almost all the light intersects with the information light La at high diffraction efficiency. Further, it is possible to adjust light amount of the reference light Lb by adjusting an area of the polarization hologram pattern 8c and an area of the mirror 3B which corresponds to the area of the polarization hologram pattern 8c. Therefore, it is possible to make light intensity ratio of the information light La and the reference light Lb closer to one to one. When the light intensity ratio of the information light La and the reference light Lb is made closer to one to one, it is possible to improve the efficiency of use of light and the contrast of the interference fringe.

Further, because the polarization hologram pattern 8c is formed in the ring shape on a surface of the transparent substrate 8a, it is possible to diffract only the reference light Lb which is composed of a peripheral part of the laser beam. At that time because the information light La at the center part of the laser beam can enter the center portion of the ring of the polarization hologram pattern 8c and can pass the hologram element 8 without receiving the diffraction action, it is possible to suppress effect of the polarization hologram pattern 8c to the information light La.

After the information light La and the reference light Lb pass the hologram element 8, they are converted from the linear polarization to the circular polarization by passing the quarter-wave plate 8Q. When the reference light Lb in the going path which is diffracted by the polarization hologram pattern 8c is supposed to be S-polarized light, it is converted into P-polarized light by going to and returning from the quarter-wave plate 8Q. Because the reference light Lb (S-polarized light) in the going path is diffracted by the polarization hologram pattern 8c, the reference light Mb (P-polarized light) in the returning path passes the polarization hologram pattern 8c without being diffracted. Therefore it is possible to prevent the reference light Mb in the returning path from scattering in the optical system and becoming stray light to cause deterioration of recording characteristics.

When the information is reproduced, the laser beam emitted from the laser light source 1 is converted into parallel beam by the collimator lens 2 and then it enters the spatial light modulator 3A and the mirror 3B obliquely. However the center part of the laser beam does not enter the beam splitter 4 by light shielding effect of the spatial light modulator 3A because the spatial light modulator 3A is set in the OFF state. On the other hand the peripheral part of the laser beam is reflected by the ring shaped mirror 3B to make it become the reference light Lb for reproducing and it enters the beam splitter 4. When the reference light Lb for reproducing enters the beam splitter 4, one half of the light amount of the reference light Lb passes the beam splitter 4 and it enters the relay lens 6.

The reference light Lb for reproducing which is emitted from the relay lens 6, is reflected by the mirror 7 and then it enters the hologram element 8. The reference light Lb which enters the hologram element 8 receives the diffraction action by the polarization hologram pattern 8c, then it passes the quarter-wave plate 8Q and then it is condensed by the objective lens 9. The objective lens 9 irradiates the recording medium 10 with the reference light Lb as shown in Fig. 5A. Information is holographically recorded in the recording medium 10 by the interference fringe. The reference light Lb is diffracted by the interference fringe of the recording medium 10 and generates reproduced light Ma shown in Fig. 5B to perform reproducing of the information. At that time the polarization hologram pattern 8c diffracts the reference light Lb in a going path such that the reference light Mb which is emitted from the objective lens 9 in a returning path comes off the light path of the reference light Lb in the going path. That is to say, because the polarization hologram pattern 8c diffracts only a specific linearly polarized light, the reference light Lb in the going path and the reference light Mb in the returning path pass the quarter-wave plate 8Q. Therefore the polarization hologram pattern 8c does not diffract the reference light Mb in the returning path but transmits it. As a result the reference light Mb comes off largely from the light receiving element 5 as shown in Fig. 4B.

The reproduced light Ma which is generated by the recording medium 10 enters the objective lens 9 along the light path of the information light La. The reproduced light Ma which is emitted from the objective lens 9 passes the hologram element 8 through the center portion of the ring of the polarization hologram pattern 8c. After the reproduced light Ma is reflected by the mirror 7, it passes through the relay lens 6 and enters the beam splitter 4. When the reproduced light Ma enters the beam splitter 4, one half of the light amount of the reproduced light Ma is reflected by the beam splitter 4 and it reaches a light receiving surface of the light receiving element 5 to provide image. The light receiving element 5 outputs the light information as electric signal in the reproduced light Ma which is received.

As described above, because the polarization hologram pattern 8c diffracts the reference light Lb in a going path such that the reference light Mb which is emitted from the objective lens 9 in a returning path comes off the light path of the reference light Lb in a going path, it is possible to suppress generation of stray light though the system has a simple structure. Because the reference light Mb in the returning path becomes only largely defocused image in the light receiving element 5, it is difficult to generate the stray light which enters the light receiving element 5 so signal characteristics become better. In other words, though the signal quality is deteriorated when the stray light enters the light receiving element 5 when reproducing is performed, it becomes possible to obtain the signal which has better quality because the generation of the stray light is suppressed by the polarization hologram pattern 8c.

After the information light La and the reference light Lb pass the hologram element 8, they are converted from the linear polarization to the circular polarization by passing the quarter-wave plate 8Q. When the reference light Lb in the going path which is diffracted by the polarization hologram pattern 8c is supposed to be S-polarized light, it is converted into P-polarized light by going to and returning from the quarter-wave plate 8Q. Because the reference light Lb (S-polarized light) in the going path is diffracted by the polarization hologram pattern 8c, the reference light Mb (P-polarized light) in the returning path passes the polarization hologram pattern 8c without being diffracted. Therefore it is possible to prevent the reference light Mb in the returning path from scattering in the optical system and becoming stray light to cause deterioration of signal characteristics.

Because the polarization hologram pattern 8c acts as the concave lens on the reference light Mb, the reference light Mb in the returning path goes in a direction in which it comes away from the light receiving element 5. As a result, it is possible to suppress the generation of the stray light more effectively. Because the polarization hologram pattern 8c is structured by the surface relief type hologram element 8, it is possible to perform separation of the reference light Mb with higher diffraction efficiency. Because it is possible to make the polarization hologram pattern 8c into a blaze type in this system, it is possible to use almost all the light for the reproducing of the information at high diffraction efficiency. Further, because the polarization hologram pattern 8c is formed in the ring shape on the surface of the transparent substrate 8a, it is possible to diffract only the reference light Lb which is composed of the peripheral part of the laser beam. Therefore, it is possible to suppress the generation of the stray light more effectively.

As will be appreciated from the foregoing, the respective embodiments described above include a light information recording apparatus and a light information reproducing apparatus that have structures described below. The light information recording apparatus has a structure that modulates spatially a center part of laser beam which is emitted from a laser light source into information light by a spatial light modulator; reflects a peripheral part of the laser beam by a mirror to make it become reference light for recording; irradiates a recording medium with the information light and the reference light by an objective lens, and performs holographic recording of information in the recording medium using an interference fringe which is obtained by interference of the information light and the reference light. The apparatus includes a hologram pattern which is disposed in a light path between the mirror and the objective lens, the hologram pattern diffracts the reference light such that the reference light which is emitted from the objective lens to the recording medium side is superimposed on the information light which is emitted from the objective lens to the recording medium side in the vicinity of a light condensing point of the information light and the reference light is condensed at a different point from the light condensing point of the information light. The light information reproducing apparatus has a structure that reflects a peripheral part of laser beam which is emitted from a laser light source by a mirror to make it become reference light for reproducing; irradiates a recording medium in which information is holographically recorded by an interference fringe with the reference light by an objective lens; and performs reproducing of the information by diffraction of the reference light using the interference fringe. The apparatus has a structure which includes a hologram pattern which is disposed in a light path between the mirror and the objective lens, and the hologram pattern diffracts the reference light in a going path such that the reference light which is emitted from the objective lens in a returning path comes off the light path of the reference light in the going path.

As described above, in the light information recording apparatus, when a structure is employed in that the hologram pattern diffracts the reference light such that the reference light which is emitted from the objective lens to the recording medium side, is superimposed on the information light which is emitted from the objective lens to the recording medium side in the vicinity of the light condensing point of the information light, and the reference light is condensed at the different point from the light condensing point of the information light, it is possible to obtain the interference fringe which has high contrast by a simple structure. As a result, it is possible to record information in the recording medium with better recording characteristics. In addition, it is possible to reduce loss in amount of light because it is possible to generate beam which has uniform light intensity by the diffraction. Further in the light information reproducing apparatus, when a structure is employed in that the hologram pattern diffracts the reference light in the going path such that the reference light which is emitted from the objective lens in the returning path comes off the light path of the reference light in the going path, it is possible to suppress generation of stray light by a simple structure. For example, if the stray light enters a light receiving element when reproducing is performed, signal quality is deteriorated. If the generation of stray light is suppressed, it becomes possible to obtain the signal which has better quality.

In the light information recording apparatus, when a structure is employed in that the hologram pattern acts as a concave lens on the reference light, the reference light is superimposed uniformly as spread beam on the information light in the vicinity of the light condensing point of the information light. Therefore, it is possible to obtain the interference fringe which has further higher contrast by a simple structure and it is possible to attain further improvement in the recording characteristics. Further in the light information reproducing apparatus when a structure is employed in that the hologram pattern acts as a concave lens on the reference light, the reference light in the returning path goes in a direction along which the reference light comes away from reproducing light. As a result it is possible to suppress the generation of stray light more efficiently.

In the light information recording apparatus when the hologram pattern is made up of a surface relief type hologram element, it is possible to separate the reference light with high diffraction efficiency. Further, when the hologram pattern is formed in a ring shape on a surface of a transparent substrate, it is possible to diffract only the reference light which is composed of the peripheral part of the laser beam. At that time because the information light of the center part of the laser beam enters a center portion of the ring of the hologram pattern and can pass the hologram element without receiving diffraction action, it is possible to suppress effect of the hologram pattern to the information light. In a case where the hologram pattern is made up of a surface relief type hologram element in the light information reproducing apparatus, the same situation is realized, and it is possible to separate the reference light with high diffraction efficiency. Further when the hologram pattern is formed in a ring shape on a surface of a transparent substrate, it is possible to diffract only the reference light which is composed of the peripheral part of the laser beam. Therefore it is possible to suppress the generation of stray light more efficiently.

In the light information recording apparatus when a polarization hologram pattern which diffracts only a specific linearly polarized light is disposed as the hologram pattern and a quarter-wave plate is disposed in a light path between the polarization hologram pattern and the objective lens, it is possible to realize a structure in that the reference light in the going path is diffracted by the polarization hologram pattern and the reference light in the returning path is passed without receiving diffraction. As a result it is possible to prevent the reference light in the returning path from scattering in the optical system to become the stray light and causing deterioration in recording characteristics. Further in the light information reproducing apparatus, in a case where the polarization hologram pattern which diffracts only a specific linearly polarized light is disposed as the hologram pattern and a quarter-wave plate is disposed in a light path between the polarization hologram pattern and the objective lens, the same situation is realized, and it is possible to realize a structure in that the reference light in the going path is diffracted by the polarization hologram pattern and the reference light in the returning path is passed without receiving diffraction. Therefore it is possible to prevent from the reference light in the returning path scattering in the optical system to become the stray light and causing deterioration in signal characteristics.
Features, components and specific details of the structures of the above-described embodiments may be exchanged or combined to form further embodiments optimized for the respective application.

## Claims

1. A light information recording apparatus which performs holographic recording of information in a recording medium (10) using an interference fringe which is obtained by interference of information light (La) and reference light (Lb), the apparatus comprising:
a laser light source (1);
a spatial light modulator (3A) which modulates spatially a center part of laser beam which is emitted from the laser light source (1) into information light (La);
a mirror (7) which reflects a peripheral part of the laser beam which is emitted from the laser light source (1) and makes it become the reference light (Lb) for recording;
an objective lens (9) which irradiates the recording medium (10) with the information light (La) and the reference light (Lb);
a hologram pattern (8b) which is disposed in a light path between the mirror (7) and the objective lens (9), and
a quarter-wave plate (8Q), wherein
the light information recording apparatus has a structure in which
the hologram pattern (8b) diffracts the reference light (Lb) such that the reference light (Lb) which is emitted from the objective lens (9) to the recording medium side, is superimposed on the information light (La) which is emitted from the objective lens (9) to the recording medium side in the vicinity of a light condensing point of the information light (La), and the reference light (Lb) is condensed at a different point from the light condensing point of the information light (La), and
the hologram pattern (8b) is a polarization hologram pattern (8c) which diffracts only a specific linearly polarized light and the quarter-wave plate (8Q) is disposed in a light path between the polarization hologram pattern (8c) and the objective lens (9).

2. The light information recording apparatus according to claim 1, the apparatus is **characterized by** a structure in which the hologram pattern (8b) acts as a concave lens on the reference light (Lb).

3. The light information recording apparatus according to claim 1 or claim 2, the apparatus is **characterized by** a structure in which the hologram pattern (8b) is structured by a surface relief type hologram element and it is formed in a ring shape on a surface of a transparent substrate (8a).

4. A light information reproducing apparatus which performs reproducing of information by diffraction of reference light (Lb) using an interference fringe, the apparatus comprising:
a laser light source (1);
a mirror (7) which reflects a peripheral part of laser beam which is emitted from the laser light source (1) and makes it become reference light (Lb) for reproducing;
an objective lens (9) which irradiates a recording medium (10) in which information is holographically recorded using an interference fringe with the reference light (Lb);
a hologram pattern (8b) which is disposed in a light path between the mirror (7) and the objective lens (9), and
a quarter-wave plate (8Q), wherein
the light information reproducing apparatus has a structure in which
the hologram pattern (8b) diffracts the reference light (La) in a going path such that the reference light (Lb) which is emitted from the objective lens in a returning path comes off the light path of the reference light (Lb) in the going path, and
the hologram pattern (8b) is a polarization hologram pattern (8c) which diffracts only a specific linearly polarized light and the quarter-wave plate (8Q) is disposed in a light path between the polarization hologram pattern (8c) and the objective lens (9).

5. The light information reproducing apparatus according to claim 4, the apparatus is **characterized by** a structure in which the hologram pattern (8b) acts as a concave lens on the reference light (Lb).

6. The light information reproducing apparatus according to claim 4 or claim 5, the apparatus is **characterized by** a structure in which the hologram pattern (8b) is structured by a surface relief type hologram element and it is formed in a ring shape on a surface of a transparent substrate (8a).

7. A light information recording and reproducing apparatus, comprising:
when recording is performed,
a center part of a laser beam which is emitted from a laser light source (1), is modulated spatially by a spatial light modulator (3A) into information light (La), and a peripheral part of the laser beam is reflected by a mirror (7) to make it become reference light (Lb) for recording,
the information light (La) and the reference light (Lb) are irradiated on a recording medium (10) by an objective lens (9), and
information is holographically recorded in the recording medium (10) using an interference fringe which is obtained by interference of the information light (La) and the reference light (Lb), and
when reproducing is performed,
a peripheral part of the laser beam which is emitted from the laser light source (1), is reflected by the mirror (7) to make it become the reference light (Lb) for reproducing,
the reference light (Lb) is irradiated by an objective lens (9) on a recording medium (10) on which information is holographically recorded using an interference fringe, and
the information is reproduced by diffraction of the reference light (Lb) using the interference fringe,
the apparatus further comprising:
a surface relief type hologram element disposed in a light path between the mirror (7) and the objective lens (9), having a polarization hologram pattern (8c) formed in a ring shape on a surface of a transparent substrate (8a), the polarization hologram pattern (8c) diffracting only a specific linearly polarized light; and
a quarter-wave plate (8Q) which is disposed in a light path between the polarization hologram pattern (8c) and the objective lens (9), wherein
the information recording and reproducing apparatus has a structure in which
the hologram pattern (8b) diffracts the reference light (Lb) such that the reference light (Lb) which is emitted from the objective lens (9) to the recording medium side, is superimposed on the information light (La) which is emitted from the objective lens (9) to the recording medium side in the vicinity of a light condensing point of the information light (La), and the reference light (Lb) is condensed at a different point from the light condensing point of the information light (La),
the hologram pattern (8b) diffracts the reference light (Lb) in a going path such that the reference light (Lb) which is emitted from the objective lens (9) in a returning path comes off the light path of the information light (La) in the returning path, and
the hologram pattern (8b) acts as a concave lens on the reference light (Lb).

## Patentansprüche

1. Lichtinformationsaufzeichnungsgerät, das eine holografische Aufzeichnung von Information auf ein Aufzeichnungsmedium (10) unter Verwendung eines Interferenzstreifens durchführt, der durch Interferenz von Informationslicht (La) und Referenzlicht (Lb) erhalten wird, mit:
einer Laserlichtquelle (1);
einem Raumlichtmodulator (3A), der einen Mittelteil des Laserstrahls, der aus der Laserlichtquelle (1) emittiert wird, räumlich in Informationslicht (La) moduliert;
einem Spiegel (7), der einen Randteil des Laserstrahls, der aus der Laserlichtquelle (1) emittiert wird, reflektiert und zum Referenzlicht (Lb) für die Aufzeichnung werden lässt;
einer Objektivlinse (9), die das Aufzeichnungsmedium (10) mit dem Informationslicht (La) und dem Referenzlicht (Lb) bestrahlt; einer Hologrammstruktur (8b), die in einem Strahlengang zwischen dem Spiegel (7) und der Objektivlinse (9) angeordnet ist, und
einer Viertelwellenplatte (8Q), wobei
das Lichtinformationsaufzeichnungsgerät einen Aufbau aufweist, in welchem
die Hologrammstruktur (8b) das Referenzlicht (Lb) so beugt, dass das Referenzlicht (Lb), das von der Objektivlinse (9) zur Seite des Aufzeichnungsmediums emittiert wird, dem Informationslicht (La), das von der Objektivlinse (9) zur Seite des Aufzeichnungsmediums emittiert wird, in der Umgebung eines Lichtkomprimierungspunkts des Informationslichts (La) überlagert wird und das Referenzlicht (Lb) an einem von dem Lichtkomprimierungspunkt des Informationslichts (La) verschiedenen Punkt komprimiert wird, und
die Hologrammstruktur (8b) eine Polarisationshologrammstruktur (8c) ist, die nur ein spezifisches linear polarisiertes Licht beugt, und die Viertelwellenplatte (8Q) in einem Strahlengang zwischen der Polarisationshologrammstruktur (8c) und der Objektivlinse (9) angeordnet ist.

2. Lichtinformationsaufzeichnungsgerät nach Anspruch 1, **gekennzeichnet durch** einen Aufbau, in dem die Hologrammstruktur (8b) als konkave Linse auf das Referenzlicht (Lb) wirkt.

3. Lichtinformationsaufzeichnungsgerät nach Anspruch 1 oder 2, **gekennzeichnet durch** einen Aufbau, in dem die Hologrammstruktur (8b) **durch** ein Oberflächenrelief-Hologrammelement strukturiert und in einer Ringform auf der Oberfläche eines transparenten Substrats (8a) ausgebildet ist.

4. Lichtinformationswiedergabegerät, das eine Aufzeichnung von Information durch Beugung von Referenzlicht (Lb) unter Verwendung eines Interferenzstreifens durchführt, mit:
einer Laserlichtquelle (1);
einem Spiegel (7), der einen Randteil des Laserstrahls, der aus der Laserlichtquelle (1) emittiert wird, reflektiert und zum Referenzlicht (Lb) für die Aufzeichnung werden lässt;
einer Objektivlinse (9), die ein Aufzeichnungsmedium (10), in welchem Information unter Verwendung eines Interferenzstreifens holografisch aufgezeichnet wird, mit dem Referenzlicht (Lb) bestrahlt;
einer Hologrammstruktur (8b), die in einem Strahlengang zwischen dem Spiegel (7) und der Objektivlinse (9) angeordnet ist, und
einer Viertelwellenplatte (8Q), wobei
das Lichtinformationsaufzeichnungsgerät einen Aufbau aufweist, in welchem
die Hologrammstruktur (8b) das Referenzlicht (La) in einem wegführenden Weg so beugt, dass das Referenzlicht (Lb), das von der Objektivlinse in einem zurückführenden Weg emittiert wird, vom Strahlengang des Referenzlichts (Lb) im wegführenden Weg abkommt, und
die Hologrammstruktur (8b) eine Polarisationshologrammstruktur (8c) ist, die nur ein spezifisches linear polarisiertes Licht beugt, und die Viertelwellenplatte (8Q) in einem Strahlengang zwischen der Polarisationshologrammstruktur (8c) und der Objektivlinse (9) angeordnet ist.

5. Lichtinformationswiedergabegerät nach Anspruch 4, **gekennzeichnet durch** einen Aufbau, in dem die Hologrammstruktur (8b) als konkave Linse auf das Referenzlicht (Lb) wirkt.

6. Lichtinformationswiedergabegerät nach Anspruch 4 oder 5, **gekennzeichnet durch** einen Aufbau, in dem die Hologrammstruktur (8b) **durch** ein Oberflächenrelief-Hologrammelement strukturiert und in einer Ringform auf der Oberfläche eines transparenten Substrats (8a) ausgebildet ist.

7. Lichtinformationsaufzeichnungs- und -wiedergabegerät, mit:
wenn eine Aufzeichnung durchgeführt wird,
einem Mittelteil eines Laserstrahls, der aus einer Laserlichtquelle (1) emittiert wird, räumlich von einem Raumlichtmodulator (3A) zu Informationslicht (La) moduliert wird, und ein Randteil des Laserstrahls wird durch einen Spiegel (7) reflektiert, um ihn zu Referenzlicht (Lb) für eine Aufzeichnung werden zu lassen, das Informationslicht (La) und das Referenzlicht (Lb) werden durch eine Objektivlinse (9) auf ein Aufzeichnungsmedium (10) gestrahlt, und
Information wird in dem Aufzeichnungsmedium (10) unter Verwendung eines Interferenzstreifens, der durch Interferenz des Informationslichts (La) und des Referenzlichts (Lb) erhalten wird, holografisch aufgezeichnet, und
wenn eine Wiedergabe durchgeführt wird,
ein Randteil des Laserstrahls, der aus der Laserlichtquelle (1) emittiert wird, wird durch den Spiegel (7) reflektiert, um ihn zum Referenzlicht (Lb) für die Wiedergabe werden zu lassen, das Referenzlicht (Lb) wird durch eine Objektivlinse (9) auf ein Aufzeichnungsmedium gestrahlt, auf dem Information unter Verwendung eines Interferenzstreifens holografisch aufgezeichnet wird, und
die Information wird durch Beugung des Referenzlichts (Lb) unter Verwendung des Interferenzstreifens wiedergegeben,
wobei das Gerät weiter Folgendes umfasst:
ein Oberflächenrelief-Hologrammelement, das in einem Strahlengang zwischen dem Spiegel (7) und der Objektivlinse (9) angeordnet ist, mit einer Polarisationshologrammstruktur (8c), die in Ringform auf der Oberfläche eines transparenten Substrats (8a) ausgebildet ist, wobei die Polarisationshologrammstruktur (8c) nur ein spezifisches linear polarisiertes Licht beugt; und
eine Viertelwellenplatte (8Q), die in einem Strahlengang zwischen der Polarisationshologrammstruktur (8c) und der Objektivlinse (9) angeordnet ist, wobei
das Informationsaufzeichnungs- und -wiedergabegerät einen Aufbau aufweist, in welchem
die Hologrammstruktur (8b) das Referenzlicht (Lb) so beugt, dass das Referenzlicht (Lb), das von der Objektivlinse (9) zur Seite des Aufzeichnungsmediums emittiert wird, dem Informationslicht (La), das von der Objektivlinse (9) zur Seite des Aufzeichnungsmediums emittiert wird, in der Umgebung eines Lichtkomprimierungspunkts des Informationslichts (La) überlagert wird und das Referenzlicht (Lb) an einem von dem Lichtkomprimierungspunkt des Informationslichts (La) verschiedenen Punkt komprimiert wird, und
die Hologrammstruktur (8b) das Referenzlicht (Lb) in einem wegführenden Weg so beugt, dass das Referenzlicht (Lb), das von der Objektivlinse (9) in einem zurückführenden Weg emittiert wird, vom Strahlengang des Informationslichts (La) im zurückführenden Weg abkommt, und
die Hologrammstruktur (8b) als konkave Linse auf das Referenzlicht (Lb) wirkt.

## Revendications

1. Appareil d'enregistrement d'informations associées à la lumière qui effectue l'enregistrement holographique d'informations sur un support d'enregistrement (10) en utilisant une frange d'interférence qui est obtenue par l'interférence de la lumière d'information (La) et de la lumière de référence (Lb), l'appareil comprenant :
une source de lumière laser (1) ;
un modulateur spatial de lumière (3A) qui module spatialement une partie centrale du faisceau laser qui est émis par la source de lumière laser (1) en lumière d'information (La) ;
un miroir (7) qui réfléchit une partie périphérique du faisceau laser qui est émis par la source de lumière laser (1) et qui la transforme en lumière de référence (Lb) pour l'enregistrement ;
une lentille d'objectif (9) qui irradie le support d'enregistrement (10) avec la lumière d'information (La) et la lumière de référence (Lb) ;
un motif holographique (8b) qui est disposé dans une trajectoire lumineuse entre le miroir (7) et la lentille d'objectif (9), et
une lame quart d'onde (8Q), dans laquelle
l'appareil d'enregistrement d'informations associées à la lumière possède une structure dans laquelle
le motif holographique (8b) diffracte la lumière de référence (Lb) de sorte que la lumière de référence (Lb) qui est émise par la lentille d'objectif (9) vers le support d'enregistrement soit superposée à la lumière d'information (La) qui est émise par la lentille d'objectif (9) vers le support d'enregistrement à proximité d'un point de condensation de lumière de la lumière d'information (La) et de sorte que la lumière de référence (Lb) soit condensée à un point différent du point de condensation de lumière de la lumière d'information (La), et
le motif holographique (8b) est un motif holographique de polarisation (8c) qui diffracte uniquement une lumière polarisée linéaire spécifique et la lame quart d'onde (8Q) est disposée dans une trajectoire lumineuse entre le motif holographique de polarisation (8c) et la lentille d'objectif (9).

2. L'appareil d'enregistrement d'informations associées à la lumière selon la revendication 1, l'appareil est **caractérisé par** une structure dans laquelle le motif holographique (8b) agit comme une lentille concave sur la lumière de référence (Lb).

3. L'appareil d'enregistrement d'informations associées à la lumière selon la revendication 1 ou 2, l'appareil est **caractérisé par** une structure dans laquelle le motif holographique (8b) est structuré par un élément holographique de type à relief de surface et il est formé sous la forme d'un anneau sur une surface d'un substrat transparent (8a).

4. Appareil de reproduction d'informations associées à la lumière qui effectue la reproduction d'informations par diffraction de la lumière de référence (Lb) en utilisant une frange d'interférence, l'appareil comprenant :
une source de lumière laser (1) ;
un miroir (7) qui réfléchit une partie périphérique du faisceau laser qui est émis par la source de lumière laser (1) et qui la transforme en lumière de référence (Lb) pour la reproduction ;
une lentille d'objectif (9) qui irradie un support d'enregistrement (10), sur lequel les informations sont enregistrées de manière holographique en utilisant une frange d'interférence, avec la lumière de référence (Lb) ;
un motif holographique (8b) qui est disposé dans une trajectoire lumineuse entre le miroir (7) et la lentille d'objectif (9), et
une lame quart d'onde (8Q), dans laquelle
l'appareil de reproduction d'informations associées à la lumière possède une structure dans laquelle
le motif holographique (8b) diffracte la lumière de référence (La) dans une trajectoire d'aller de sorte que la lumière de référence (Lb) qui est émise par la lentille d'objectif dans une trajectoire de retour sorte de la trajectoire lumineuse de la lumière de référence (Lb) dans la trajectoire d'aller, et
le motif holographique (8b) est un motif holographique de polarisation (8c) qui diffracte uniquement une lumière polarisée linéaire spécifique et la lame quart d'onde (8Q) est disposée dans une trajectoire lumineuse entre le motif holographique de polarisation (8c) et la lentille d'objectif (9).

5. L'appareil de reproduction d'informations associées à la lumière selon la revendication 4, l'appareil est **caractérisé par** une structure dans laquelle le motif holographique (8b) agit comme une lentille concave sur la lumière de référence (Lb).

6. L'appareil de reproduction d'informations associées à la lumière selon la revendication 4 ou 5, l'appareil est **caractérisé par** une structure dans laquelle le motif holographique (8b) est structuré par un élément holographique de type à relief de surface et il est formé sous la forme d'un anneau sur une surface d'un substrat transparent (8a).

7. Appareil d'enregistrement et de reproduction d'informations associées à la lumière, comprenant :
quand l'enregistrement est effectué,
une partie centrale d'un faisceau laser qui est émis par une source de lumière laser (1) est modulée spatialement par un modulateur spatial de lumière (3A) en lumière d'information (La) et une partie périphérique du faisceau laser est réfléchie par un miroir (7) pour la transformer en lumière de référence (Lb) pour l'enregistrement,
la lumière d'information (La) et la lumière de référence (Lb) sont irradiées sur un support d'enregistrement (10) par une lentille d'objectif (9), et
les informations sont enregistrées de manière holographique sur le support d'enregistrement (10) en utilisant une frange d'interférence qui est obtenue par l'interférence de la lumière d'information (La) et de la lumière de référence (Lb), et
quand la reproduction est effectuée,
une partie périphérique du faisceau laser qui est émis par la source de lumière laser (1) est réfléchie par le miroir (7) pour la transformer en lumière de référence (Lb) pour la reproduction,
la lumière de référence (Lb) est irradiée par une lentille d'objectif (9) sur un support d'enregistrement (10) sur lequel les informations sont enregistrées de manière holographique en utilisant une frange d'interférence, et
les informations sont reproduites par diffraction de la lumière de référence (Lb) en utilisant la frange d'interférence,
l'appareil comprenant en outre :
un élément holographique de type à relief de surface disposé dans une trajectoire lumineuse entre le miroir (7) et la lentille d'objectif (9), possédant un motif holographique de polarisation (8c) formé sous la forme d'un anneau sur une surface d'un substrat transparent (8a), le motif holographique de polarisation (8c) diffractant uniquement une lumière polarisée linéaire spécifique, et
une lame quart d'onde (8Q) qui est disposée dans une trajectoire lumineuse entre le motif holographique de polarisation (8c) et la lentille d'objectif (9), dans laquelle
l'appareil d'enregistrement et de reproduction d'informations possède une structure dans laquelle
le motif holographique (8b) diffracte la lumière de référence (Lb) de sorte que la lumière de référence (Lb) qui est émise par la lentille d'objectif (9) vers le support d'enregistrement soit superposée à la lumière d'information (La) qui est émise par la lentille d'objectif (9) vers le support d'enregistrement à proximité d'un point de condensation de lumière de la lumière d'information (La) et de sorte que la lumière de référence (Lb) soit condensée à un point différent du point de condensation de lumière de la lumière d'information (La),
le motif holographique (8b) diffracte la lumière de référence (Lb) dans une trajectoire d'aller de sorte que la lumière de référence (Lb) qui est émise par la lentille d'objectif (9) dans une trajectoire de retour sorte de la trajectoire lumineuse de la lumière d'information (La) dans la trajectoire de retour, et
le motif holographique (8b) agit comme une lentille concave sur la lumière de référence (Lb).
